# EUROPEAN PATENT APPLICATION

(11) **EP 2 199 905 A1**
(43) Date of publication of application: **23.06.2010**
(21) Application number: 09011216.0
(22) Date of filing: 01.09.2009
(51) Int. Cl.: G06F 9/44

(54) **Lifecycle management and consistency checking of object models using application platform tools**

(30) Priority: 19.12.2008 US 339368
(71) Applicant: SAP AG, 69190 Walldorf (DE)
(72) Inventor: Kazmaier, Gerrit Simon, 69190 Walldorf (DE); Said, Bare, 69190 Walldorf (DE); Pfeifer, Wolfgang, 69190 Walldorf (DE)
(74) Representative: Müller-Boré & Partner Patentanwälte

(57) **Abstract**

A method includes a data structure comprising a status and action management schema associated with an object model development lifecycle. A status and action management service operates to determine a lifecycle state of a first object model based on the status and action management schema, receive a request to perform a lifecycle action on the first object model, determine, based on the lifecycle state and the status and action management schema, whether the lifecycle action is allowed to be performed, and, if so, allow the lifecycle action to be performed.

A business object processing framework may detect a trigger event associated with an object model, execute validation code associated with the trigger event and the object model to evaluate a constraint of the object model, and return a result of the evaluation.

## Description

### FIELD

Some embodiments relate to business objects supported by an application platform. More specifically, some embodiments relate to the use of application platform tools to facilitate the development of object models.

### BACKGROUND

A business object is a software model representing real-world items used during the transaction of business. For example, a business object model may represent a business document such as a sales order, a purchase order, or an invoice. A business object model may also represent master data objects such as a product, a business partner, or a piece of equipment. Particular documents (e.g., SalesOrder SO435539) and/or master data objects (e.g., BusinessPartner ACME corporation) are represented by instances of their representing business object models, or business object instances.

Conventional business process platforms such as the Application Platform provided by SAP of Walldorf, Germany, provide services and tools to support the use of business object models and instances thereof. For example, such platforms may expose application programming interfaces to provide read and write access to business object instances. Also included may be a business object processing framework to validate business object instances, lifecycle services to manage business object instance lifecycles, and a status and action management component to manage states of the business object instances.

Each of the specific business object models supported by the business process platform conforms to a generic business object model (i.e., a meta-metadata model). As a result, the same application programming interfaces, frameworks, services, and components can be used for all instances of the specific business object models. The foregoing synergies facilitate the use of instances of any newly-developed specific business object model.

However, the development of new specific business object models presents significant challenges. Due to the well-developed infrastructure supporting business object instances, a proposed new specific business object model must pass through many levels of manual review and compatibility checks before it may be deployed in a business process platform. Changes to an existing specific business object model are similarly difficult to coordinate.

Consistency checking presents particular difficulties in the development of new object models which are themselves instances of a metadata object model. Generally, a metadata object model provides an abstract syntax stating the structural characteristics of entities and the relationships between them. However, a metadata object model may also be associated with a static semantic providing additional information about the metadata object model. This static semantic contains information that cannot be expressed in structural features.

For example, an abstract syntax may express a structural characteristic such as "an instance of Entity A is connected to an instance of Entity B". On the other hand, the abstract syntax of a metadata object model cannot express a constraint such as "only those instances of Entity B for which Attribute X = true may be connected to an instance of Entity A".

An object modeling system is desired to efficiently address static semantics as described above. Such a system may provide formal means to express constraints, a system to connect a constraint to a context entity to which it belongs, an engine that is able to receive an object model as input and evaluate the constraints thereof, and an indicator for the current state of an object model under development.

Conventional standards for developing object models based on a metadata object model include Meta Object Facilities (MOF) or Ecore from the Eclipse Modeling Framework (EMF). These standards do not support lifecycle management of object models, and therefore constraints associated with a metadata object model cannot be bound to a certain time or state of an object model instance. Such constraints are considered invariant in one approach, which greatly reduces semantic flexibility. Common meta-modeling standards also fail to provide a means to determine and specify which actions may be performed on an object model instance under development.

### BRIEF DESCRIPTION OF THE DRAWINGS

FIG. 1 is a block diagram illustrating a metadata modeling architecture according to some embodiments.
FIG. 2 is a diagram of a meta-metadata object model according to some embodiments.
FIG. 3 is a diagram illustrating logical dependencies of metadata object models according to some embodiments.
FIG. 4 illustrates a status and action management schema associated with an object model development lifecycle according to some embodiments.
FIG. 5 is a flow diagram of a status and action management service according to some embodiments.

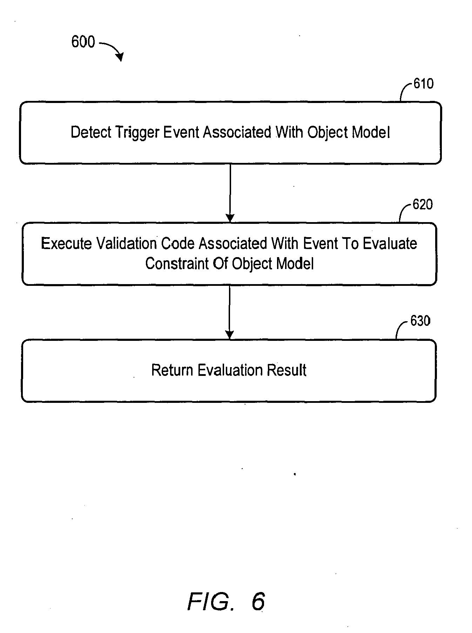

FIG. 6 is a flow diagram of a business object processing framework according to some embodiments.
FIG. 7 is a detailed block diagram of a metadata model repository architecture according to some embodiments.

### DETAILED DESCRIPTION

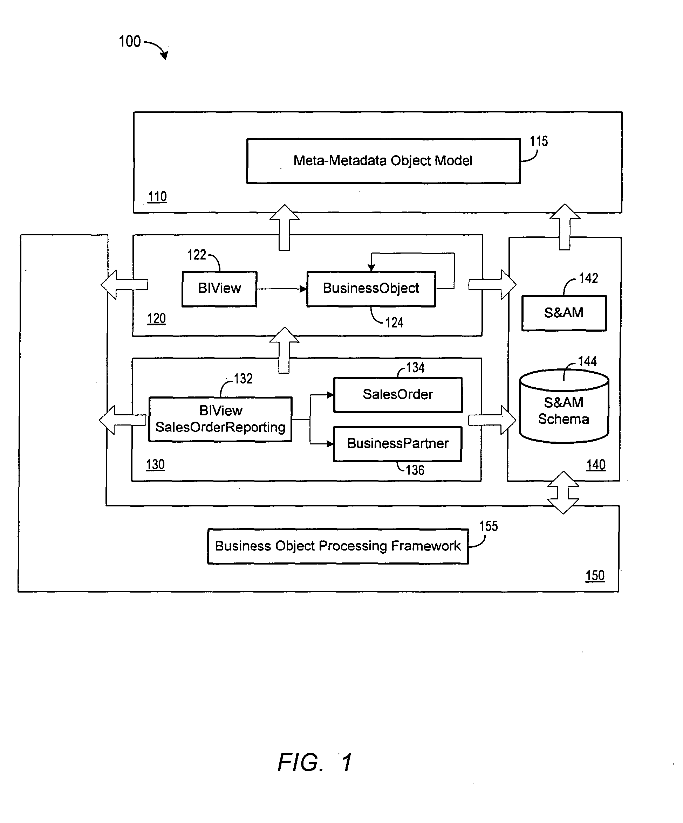

FIG. 1 is a block diagram of metadata modeling architecture 100 according to some embodiments. FIG. 1 represents a logical architecture for describing some embodiments, and actual implementations may include more or different components arranged in any manner. Architecture 100 may be implemented using any number of computer devices, the meta-metadata object models, metadata object models, and object models shown therein may be embodied in any types of electronic data structures, and one or more processors may execute program code to perform any processes described herein.

Architecture 100 includes meta-metadata model layer 110 including meta-metadata model 115. Meta-metadata object model 115 may consist of nodes, composite associations, associations, elements structure and attribute properties.

Metadata model layer 120 includes metadata object models 122 and 124 which are instances of meta-metadata object model 115. Metadata object models 122 and 124 describe, respectively, generic object models of a Business Intelligence (BI) view and a business object. As shown, a logical dependency exists between metadata object models 122 and 124. Other metadata models that may reside in metadata model layer 120 may describe, for example, a work center, user interface texts, and process components, but embodiments are not limited thereto.

Object model layer 130 includes object models which are instances of metadata object models from metadata model layer 120. More specifically, object model 132 is an instance of metadata object model 122 and object models 134 and 136 are instances of metadata object model 124. For purposes of the present description, metadata object models 122 and 124 and object models 132 through 136 may all be referred to as "object models" as well as "object model instances". The object models of all layers of architecture 100 may be embodied in any type of data structure, including but not limited to eXtensible Markup Language files.

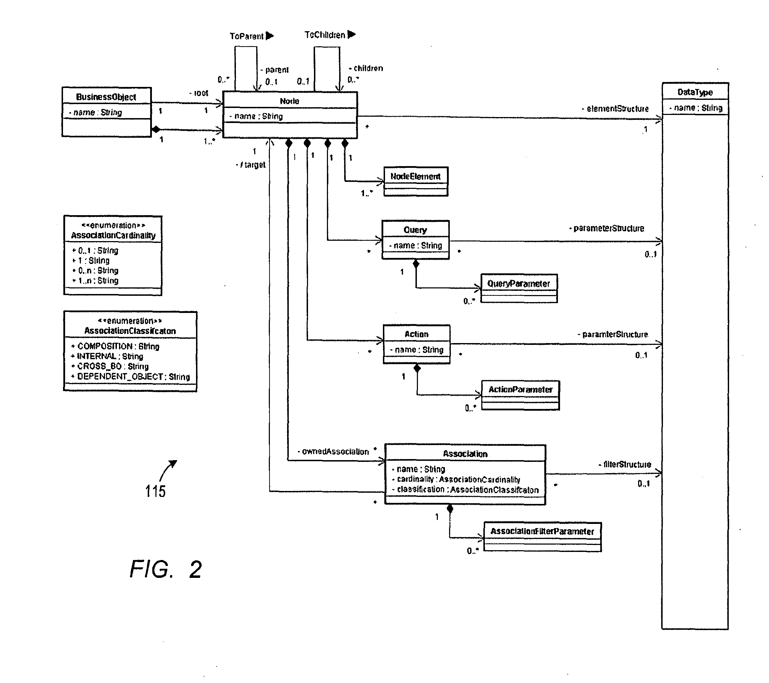

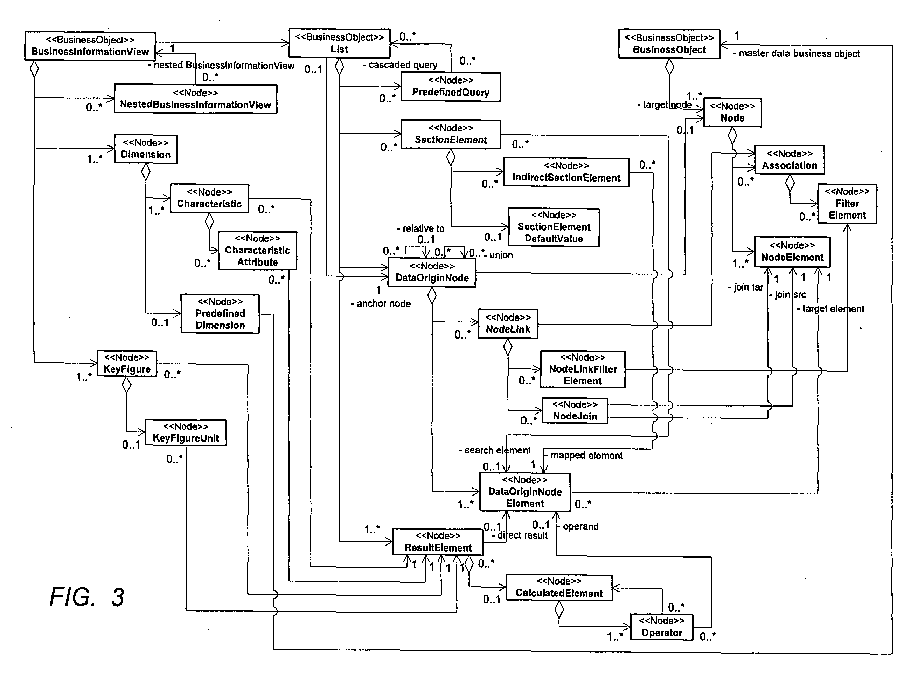

According to some embodiments, meta-metadata object model 115 is identical to business object metadata object model 122. In other words, business object metadata object model 122 may comprise an instance of itself. FIG. 2 is a diagram of meta-metadata object model 115 according to some embodiments. FIG. 3 is a diagram illustrating the modeling of logical dependencies of different metadata object models (e.g., Business Information View; List; Business Object) of metadata model layer 120 using meta-metadata object model 115.

The present inventors have discovered that the runtime components of a business process platform used to support instances of a business object model may be leveraged to facilitate the development of object models. This leveraging is particularly strong in embodiments where the object models being developed are themselves instances of the business object model for which the runtime components were developed. With reference to FIG. 1, some embodiments may be used to develop instances of meta-metadata object model 115 (e.g., metadata object models 122 and 124), as well as instances of metadata object models 122 and 124 (e.g., object models 132, 134 and 136).

More specifically, repository services 140 and implementation layer 150 may comprise components typically used at runtime to manage business object instances (e.g., SalesOrder SO435539, BusinessPartner ACME Corporation). Repository services 140 include Status & Action Management (S&AM) component 142 and S&AM schemas 144. Conventionally, each business object model (e.g., SalesOrder) of a platform is associated with an S&AM schema. At runtime, component 142 uses a schema 144 associated with a business object and status variables of the business object to provide services relating to instances of the business object. Such services include determining states of the instances, managing actions that can be performed on the instances, and identifying state transitions of the instances.

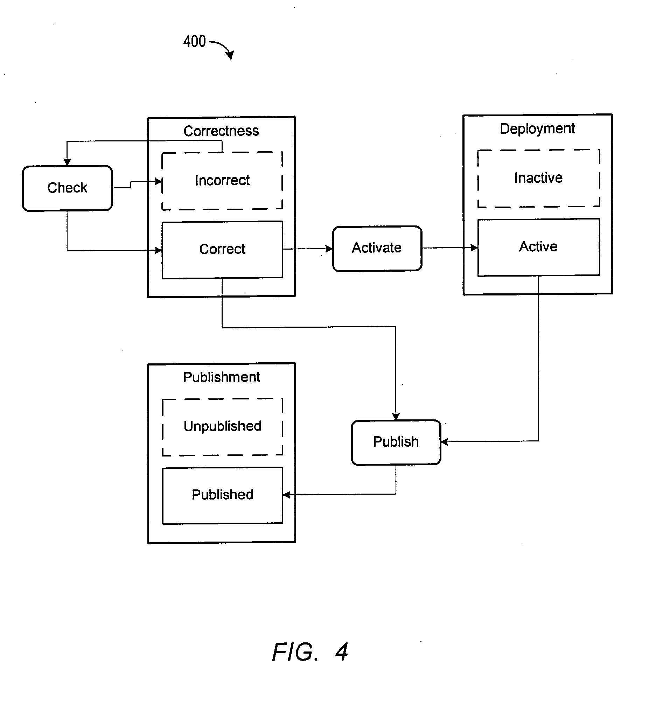

According to some embodiments, S&AM component 142 is used in conjunction with an appropriate S&AM schema 144 during design time to manage the development lifecycle of an object model (e.g., any object model of layer 120 or layer 130). FIG. 4 is a diagram of S&AM schema 400 which characterizes the development lifecycle of an object model according to some embodiments. The development lifecycle consists of consecutive states of the object model and actions that can be performed on the object model to move from one state to another.

The meta-object model of which the object model under development is an instance should include S&AM constructs such as the status variables mentioned above. In this regard, schema 400 characterizes the development lifecycle of an object model using the status variables "Correctness", Deployment" and "Publishment". Schema 400 also indicates the following state transitions (i.e., actions): "Check", "Activate" and "Publish".

Returning to FIG. 1, business object processing framework (BOPF) 155 conventionally consists of business logic (e.g., ABAP code) associated with a trigger event and a business object node. At runtime, and upon detection of the trigger event, the business logic is executed to validate instances of the business object node against a constraint. Accordingly, the constraints need not be satisfied at all times, but only upon detection of the trigger event.

In the context of object model development, every constraint in a parent metadata object model can be expressed in BOPF validation code. Unlike conventional standards to develop object models, the modeler can specify the conditions under which a specific constraint must be satisfied, and these conditions may include the state (i.e., per S&AM status variables) of the object model.

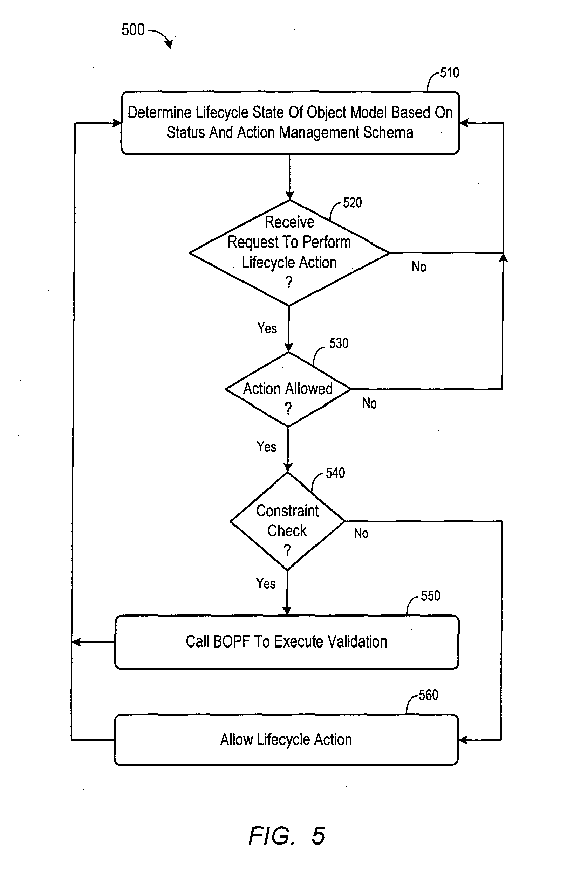

FIG. 5 is a flow diagram of process 500 according to some embodiments. Process 500 may be performed during design time by executing program code of S&AM component 142 of architecture 100, but embodiments are not limited thereto.

Initially, at 510, a lifecycle state of an object model is determined based on an S&AM schema associated with an object model development lifecycle. The object model may comprise any object model for which a parent object model exists. For example, the object model may comprise any object model of layer 120 (i.e., having parent object model 115) or layer 130 (i.e., having parent object model 122 or 124) of architecture 100.

The S&AM schema may comprise schema 400 of FIG. 4. The S&AM schema may be specifically associated with the object model of which the object model being developed is an instance. The S&AM schema may be associated with all object models under the assumption that the development lifecycle specified therein applies to each object model.

S&AM component 142 may determine the lifecycle state at 510 by evaluating status variables associated with the object model in view of the S&AM schema. This determination may use conventional capabilities of S&AM component 142, albeit in an inventive context.

At 520, it is determined whether a request to perform a lifecycle action on the object model has been received. If not, flow cycles between 510 and 520 to periodically re-determine a lifecycle state of the object model (e.g., in case a value of a status variable has changed) and re-determine whether a request has been received.

Once a request has been received at 520 (e.g., an indication from the developer to activate or publish the object model), it is determined at 530 whether the requested action is allowed. S&AM component 142 may refer to the S&AM schema at 530 to determine if the requested action is permitted to follow from the currently-determined lifecycle state. For example, and with reference to S&AM schema 400, it may be determined that the "Activate" action is not allowed if the currently-determined lifecycle state is "Incorrect". Flow therefore returns to 510.

Continuing the present example, it will be assumed that a request to check a constraint is received at 520. Based on schema 400 and the currently-determined lifecycle state of "Incorrect", it is determined at 530 that the requested action is allowed. Flow then continues from 540 to 550 because the request comprises a request to check a constraint.

Accordingly, a BOPF is called at 550 to execute a validation to check the constraint. As mentioned above, the validation is code associated with the object model and designed to perform the requested check. For example, the BOPF may determine whether the object model under development is semantically correct. Any other constraint may be evaluated at 550.

In the present embodiment, the status variables of the object model are changed, if necessary, based on the results of the check. Flow then returns to 510 and continues as described above. In this regard, a new lifecycle state may be determined at 510 depending on whether and how the status variables of the object model were changed as a result of the check.

Alternatively, flow proceeds from 540 directly to 560 if the requested action is not a constraint check (i.e., doesn't require services of BOPF 155). The requested lifecycle action is allowed at 560 and flow returns to 510. The lifestyle action may result in a change to the status variables of the object model. Accordingly, a new lifecycle state may be determined at 510 depending on the values of the status variables of the object model upon return to 510.

BOPF 155 may execute a validation based on trigger events other than that described with respect to process 500. Such a capability provides helpful flexibility in defining and evaluating constraints during the development lifecycle. Process 600 may be executed by BOPF 155 with respect to an object model during development of the object model according to some embodiments.

BOPF detects a trigger event associated with the object model at 610. The trigger event may comprise a call from S&AM component 142 as described with respect to process 500, but embodiments are not limited thereto. Some examples of trigger events include, but are not limited to, creation of a node of the object model, an instruction to save the object model, etc.

Next, at 620, BOPF 155 executes validation code associated with the trigger event. The validation code allows BOPF 155 to evaluate a given constraint associated with the event and the object model. BOPF 155 may consider S&AM status variables during the evaluation at 620.

In one example, attributes of business objects may be grouped in an analytical report into characteristics (rows and columns) and key figures (cell data). Key figures can be aggregated (e.g., the net amount of a SalesOrder instance can be aggregated by buyer, seller, buyer's company, etc.). Some types of aggregation (e.g., sum) can only be performed on numeric values. Therefore, the key figures must comprise numerical values. This constraint cannot be expressed in the structure of the metadata object model of which the object model being developed is an instance. Validation code is therefore executed at 620 to determine whether the aggregation can be performed on the selected business object attribute.

A result of the evaluation is returned at 630. The result may consist of node keys of object model nodes which failed the evaluation, messages, and/or any other suitable result.

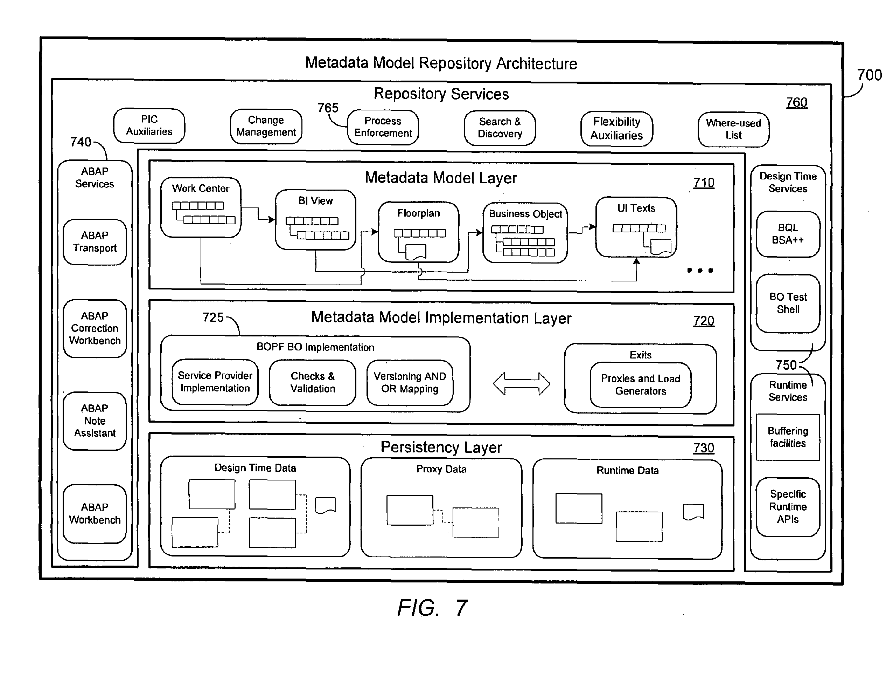

FIG. 7 illustrates architecture 700 according to some embodiments. Architecture 700 may comprise a specific implementation of architecture 100, but embodiments are not limited thereto.

Metadata model layer 710 includes metadata models as described above, and illustrates logical dependencies between the metadata models. As also described above, each metadata model may comprise an instance of a meta-metadata model.

Metadata implementation layer 720 includes business object processing framework 725 to provide constraint checks and validations as described herein. Unlike conventional checks and validations of object model instance data, business object processing framework 725 may check and validate object models developed using architecture 700. BOPF 725 may also generate appropriate database tables in persistency layer 730 to store data structures comprising object models derived from the metadata models of layer 710.

ABAP services 740 represent a generic connection to ABAP services provided for all instances (i.e., object models) derived from the repository metadata models. Such services may include transport and correction tools and an ABAP development workbench. ABAP services 740 may be similar to corresponding ABAP services currently provided for business object instances.

Access layer 750 provides uniform mechanisms to access repository object models. For example, Business Query Language/BSA++ may be used to access design time aspects of the object models. During runtime, access layer may provide specific performance-optimized application programming interfaces and buffering facilities.

Repository services 760 also reflect services that may be conventionally available with respect to object model instances, but not with respect to object models themselves. For example, process enforcement services 765 may comprise a Status & Action Management component for operating in conjunction with a status and action management schema associated with an object model development lifecycle as described herein.

Each system and device described herein may be implemented by any number of devices in communication via any number of other public and/or private networks. Two or more of devices of may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

All systems and processes discussed herein may be embodied in program code stored on one or more computer-readable media and executed by a processor. Such media may include, for example, a floppy disk, a CD-ROM, a DVD-ROM, a Zip™ disk, magnetic tape, and solid state RAM or ROM memories. Embodiments are therefore not limited to any specific combination of hardware and software. The embodiments described herein are solely for the purpose of illustration. Those in the art will recognize other embodiments may be practiced with modifications and alterations limited only by the claims.

## Claims

1. A computer-implemented system comprising:
a data structure comprising a status and action management schema associated with an object model development lifecycle; and
executable program code of a status and action management service to:
determine a lifecycle state of a first object model based on the status and action management schema;
receive a request to perform a lifecycle action on the first object model;
determine, based on the lifecycle state and the status and action management schema, whether the lifecycle action is allowed to be performed; and
if the lifecycle action is allowed to be performed, allow the lifecycle action to be performed on the first object model.

2. A system according to Claim 1, the executable program code of the status and action management service to determine the lifecycle state based on status variables associated with the first object model.

3. A system according to Claim 1 or 2, wherein, after the lifecycle action is allowed to be performed, the executable program code of the status and action management service is further to determine a new lifecycle state of the first object model based on updated status variables associated with the first object model.

4. A system according to one of the preceding Claims, further comprising:
executable program code of a business object processing framework,
wherein the executable program code of the status and action management service is further to:
determine whether the lifecycle action comprises a constraint check; and
call the business object process framework to execute a validation associated with the first object model if the lifecycle action comprises a constraint check.

5. A system according to one of the preceding Claims, wherein the business object processing framework is to:
detect a trigger event associated with the object model;
execute validation code associated with the trigger event and the object model to evaluate a constraint of the object model; and
return the result of the evaluation to the status and action management service.

6. A system according to one of the preceding Claims, wherein the executable program code of the status and action management service is further to:
determine a second lifecycle state of a second object model based on the status and action management schema, wherein the second object model is an instance of the first object model;
receive a second request to perform a second lifecycle action on the second object model;
determine, based on the second lifecycle state and the status and action management schema, whether the second lifecycle action is allowed to be performed; and
if the second constraints are satisfied, allow the second lifecycle action to be performed.

7. A computer-implemented system comprising executable program code of a business object processing framework to:
detect a trigger event associated with an object model;
execute validation code associated with the trigger event and the object model to evaluate a constraint of the object model; and
return a result of the evaluation.

8. A system according to Claim 7, the business object processing framework further to:
detect a second trigger event associated with a second object model;
execute second validation code associated with the second trigger event and the second object model to evaluate a second constraint of the second object model; and
return a result of the evaluation of the second constraint.

9. A system according to Claim 8, wherein the second object model is an instance of the first object model.

10. A method comprising:
determining a lifecycle state of a first object model based on a status and action management schema associated with an object model development lifecycle;
receiving a request to perform a lifecycle action on the first object model;
determining, based on the lifecycle state and the status and action management schema, whether the lifecycle action is allowed to be performed; and
if the lifecycle action is allowed to be performed, allowing the lifecycle action to be performed on the first object model.

11. A method according to Claim 10, further comprising:
determining the lifecycle state based on status variables associated with the first object model.

12. A method according to Claim 10 or 11, further comprising:
determining, after the lifecycle action is allowed to be performed, a new lifecycle state of the first object model based on updated status variables associated with the first object model.

13. A method according to any one of Claims 10 to 12, further comprising:
determining whether the lifecycle action comprises a constraint check; and
calling a the business object process framework to execute a validation associated with the first object model if the lifecycle action comprises a constraint check.

14. A method according to any one of Claims 10 to 13, further comprising:
detecting a trigger event associated with the object model;
executing validation code associated with the trigger event and the object model to evaluate a constraint of the object model; and
returnnig the result of the evaluation to the status and action management service.

15. A method according to any one of Claims 10 to 14, further comprising:
determining a second lifecycle state of a second object model based on the status and action management schema, wherein the second object model is an instance of the first object model;
receiving a second request to perform a second lifecycle action on the second object model;
determining, based on the second lifecycle state and the status and action management schema, whether the second lifecycle action is allowed to be performed; and
if the second constraints are satisfied, allowing the second lifecycle action to be performed.
